# EUROPEAN PATENT APPLICATION

(11) **EP 4 813 491 A1**
(43) Date of publication of application: **30.09.2026**
(21) Application number: 25305458.9
(22) Date of filing: 28.03.2025
(51) Int. Cl.: B01D 3/20, B01D 3/32, B01D 53/14, B01D 53/18

(54) **MULTI-LEVEL CHIMNEY TRAY FOR FLUID-PROCESSING COLUMNS**

(71) Applicant: Technip Energies France, 92741 Nanterre Cedex (FR)
(72) Inventor: SAMUELSEN, Eirik, 92741 Nanterre Cedex (FR); BRUSTAD, Stig Karl, 92741 Nanterre Cedex (FR)
(74) Representative: Edson, Russell Gregory

(57) **Abstract**

Aspects of the present disclosure relate to a multi-level chimney tray for distributing gas and preventing leakage of a fluid in a fluid-processing apparatus. For example, a fluid-processing apparatus may include a column with a gas inlet that can introduce a gas into a first processing volume of the column. The fluid-processing apparatus may further include a second processing volume location above the first processing volume. The second processing volume may include a liquid inlet that can introduce a liquid into the column. Additionally, the fluid-processing apparatus can include a multi-level chimney tray positioned between the first processing volume and the second processing volume and includes a first chimney tray and a second chimney tray. The multi-level chimney tray may allow the gas to flow upwardly from the first processing volume to the second processing volume and may prevent the liquid from flowing from the second processing volume to the first processing volume.

## Description

### Technical Field

The present disclosure relates generally to gas processing and liquid leakage prevention in fluid-processing columns, and more particularly, although not necessarily exclusively, to a multi-level chimney tray for preventing leakage of a liquid in a fluid-processing column.

### Background

Fluid-processing columns may be used in industrial plants, such as chemical processing plants, petrochemical processing plants, or petroleum processing plants, for processes. Examples of the processes include absorption processes (e.g., processes in which at least one component of a gas mixture is transferred into a liquid phase), distillation processes (e.g., processes in which a liquid mixture is separated based on a boiling point of at least one component of the liquid mixture), and stripping processes (e.g., processes in which at least one component of a liquid mixture is removed using a stripping gas). In some cases, multiple absorption processes, distillation processes, stripping processes, or other processes (e.g., heating a substance or cooling the substance) may be performed in a fluid-processing column.

### Summary

The following presents a simplified summary of examples of methods of and systems for using a multi-level chimney tray to prevent leakage of a liquid in a fluid-processing apparatus to provide a basic overview for this disclosure. This summary is not an exhaustive overview. This summary is not intended to identify key, critical, and/or essential elements of the methods and systems disclosed herein or to fully delineate the scope of this disclosure. This simplified summary is a prelude to the more detailed description presented in the Detailed Description below.

As used below, any reference to a series of examples is to be understood as a reference to each of those examples disjunctively (e.g. "examples 1-4" is to be understood as "examples 1, 2, 3, or 4").

Example 1 is a fluid-processing apparatus comprising: a column comprising a gas inlet through which a gas is introduced into the column and a gas outlet; a multi-level chimney tray separating a first processing volume of the column from a second processing volume of the column; the first processing volume of the column comprising a first liquid inlet through which a first liquid is introduced into the column, wherein the first liquid contacts the gas in the first processing volume; the second processing volume of the column located above the first processing volume, the second processing volume comprising a second liquid inlet through which a second liquid is introduced into the column, wherein the second liquid contacts the gas in the second processing volume; and the multi-level chimney tray that is positioned between the first processing volume and the second processing volume and comprises a first chimney tray comprising a first plurality of gas chimneys and a second chimney tray below the first chimney tray and comprising a second plurality of gas chimneys, the multi-level chimney tray configured to allow the gas to flow upwardly from the first processing volume into the second processing volume and to prevent the second liquid from flowing from the second processing volume to the first processing volume.

Example 2 is the fluid-processing apparatus of example(s) 1, wherein, when the column is oriented in a vertical orientation, the first plurality of gas chimneys are laterally offset relative to the second plurality of gas chimneys.

Example 3 is the fluid-processing apparatus of example(s) 1-2, wherein a flow path of the gas flowing upwardly from the first processing volume into the second processing volume is tortuous between the first plurality of gas chimneys and the second plurality of gas chimneys.

Example 4 is the fluid-processing apparatus of example(s) 1-3, wherein each gas chimney of the second plurality of gas chimneys is vertically aligned with a gas impermeable section of the first chimney tray.

Example 5 is the fluid-processing apparatus of example(s) 1-4, wherein the multi-level chimney tray further comprises one or more liquid motion dampening baffles, wherein each of the one or more liquid motion dampening baffles is positioned between at least two of the first plurality of gas chimneys.

Example 6 is the fluid-processing apparatus of example(s) 1-5, wherein the multi-level chimney tray further comprises a leak detection system configured to detect contact of the second liquid with the second chimney tray.

Example 7 is the fluid-processing apparatus of example(s) 1-6, wherein the leak detection system comprises at least one leak detection sensor configured to detect the contact of the second liquid with the second chimney tray and a processor configured to transmit an alert to a user device or control system indicating the contact of the second liquid with the second chimney tray.

Example 8 is the fluid-processing apparatus of example(s) 1-7, wherein the multi-level chimney tray further comprises a channel extending about at least a portion of a perimeter of the first chimney tray, wherein an inner surface of the channel is lower than a top surface of the first chimney tray.

Example 9 is the fluid-processing apparatus of example(s) 1-8, wherein the multi-level chimney tray further comprises a second channel extending about at least a portion of a perimeter of the second chimney tray, wherein an inner surface of the second channel is lower than a top surface of the second chimney tray.

Example 10 is the fluid-processing apparatus of example(s) 1-9, wherein each gas chimney of the first plurality of gas chimneys comprises a cover and a gas conduit, wherein the cover is positioned above and spaced apart from an upper edge of the gas conduit.

Example 11 is the fluid-processing apparatus of example(s) 1-10, wherein each gas chimney of the second plurality of gas chimneys comprises a gas conduit.

Example 12 is the fluid-processing apparatus of example(s) 11, wherein at least some gas chimneys of the second plurality of gas chimneys further comprise a cover positioned above and spaced apart from an upper edge of the gas conduit.

Example 13 is a method comprising: introducing, via a gas inlet, a gas into a column, the gas flowing upwardly from a first volume of the column to a second volume of the column through a multi-level chimney tray, the multi-level chimney tray comprising a first chimney tray comprising a first plurality of gas chimneys and a second chimney tray below the first chimney tray and comprising a second plurality of gas chimneys; and introducing, via a liquid inlet, a liquid into the second volume that contacts the gas in the second volume, the multi-level chimney tray being configured to prevent the liquid from flowing from the second volume to the first volume.

Example 14 is the method of example(s) 13, further comprising collecting, at a surface of the first chimney tray, the liquid.

Example 15 is the method of example(s) 13-14, further comprising directing, via a channel extending about at least a portion of a perimeter of the first chimney tray, the liquid to a liquid outlet.

Example 16 is the method of example(s) 13-15, further comprising motion dampening movement of the liquid on the surface of the first chimney tray using one or more liquid motion dampening baffles positioned between at least two of the first plurality of gas chimneys.

Example 17 is the method of example(s) 13-16, further comprising detecting, by a leak detection system of the multi-level chimney tray, the liquid on the second chimney tray.

Example 18 is the method of example(s) 13-17, further comprising, in response to detecting the liquid on the second chimney tray, transmitting, by the leak detection system of the multi-level chimney tray, an alert to a user device or to a control system.

Example 19 is the method of example(s) 13-18, further comprising directing, via a channel positioned about at least a portion of a perimeter of the second chimney tray, the liquid on the second chimney tray to a liquid outlet.

Example 20 is a multi-level chimney tray comprising: a first chimney tray comprising a first plurality of gas chimneys, wherein each gas chimney of the first plurality of gas chimneys comprises a cover of and a gas conduit, wherein the cover is positioned above and spaced apart from an upper edge of the gas conduit; a second chimney tray positioned below the first chimney tray and comprising a second plurality of gas chimneys, wherein each gas chimney of the second plurality of gas chimneys comprises a gas conduit, and wherein the first plurality of gas chimneys are laterally offset relative to the second plurality of gas chimneys; a first channel extending about at least a portion of a perimeter of the first chimney tray and configured to receive a liquid; and a second channel extending about at least a portion of a perimeter of the second chimney tray and configured to receive the liquid.

The foregoing, together with other features and examples, will become more apparent upon referring to the following specification, claims, and accompanying drawings.

### Brief Description of the Drawings

FIG. 1 is a schematic example of a fluid-processing apparatus that includes an example of a multi-level chimney tray according to some aspects of the present disclosure.
FIG. 2A is a perspective view of an example of a chimney tray of a multi-level chimney tray according to some aspects of the present disclosure.
FIG. 2B is a perspective view of another example of a chimney tray of a multi-level chimney tray according to some aspects of the present disclosure.
FIG. 3 is a cross-sectional view of an example of a gas chimney of a multi-level chimney tray according to some aspects of the present disclosure.
FIG. 4 is a cross-sectional view of another example of a multi-level chimney tray according to some aspects of the present disclosure.
FIG. 5 is a perspective view of another example of a multi-level chimney tray according to some aspects of the present disclosure.
FIG. 6 is a schematic of an example of a split fluid-processing apparatus with an example of a multi-level chimney tray according to some aspects of the present disclosure.
FIG. 7 is a flowchart of an example of a method for distributing gas and preventing leakages in a fluid-processing apparatus using a multi-level chimney tray according to some aspects of the present disclosure.

### Detailed Description

Aspects of the present disclosure generally relate to a multi-level chimney tray for preventing leakage of a liquid in a fluid-processing apparatus. The fluid-processing apparatus may include a fluid-processing column (referred to herein as a column), which may be a substantially upwardly extending structure through which one or more gases, one or more liquids, or a combination thereof can flow. The multi-level chimney tray may be positioned between a first processing volume of the column and a second processing volume of the column. A processing volume can be a section of the column through which a gas, a liquid, or a combination thereof can flow, or in which other processes occur. The gas may include a single component (e.g., steam) or may be a gas mixture with at least two substances in their gaseous phase (e.g., a natural gas containing carbon dioxide). The liquid may similarly include a single component (e.g., water) or may be a liquid mixture of at least two substances in their liquid phase (e.g., an amine solution). The multi-level chimney tray may be designed to allow the gas to flow upward from the first processing volume to the second processing volume to enable the gas to contact liquid in each processing volume. The multi-level chimney tray may further be designed to collect a liquid flowing downward in the first processing volume to prevent the liquid from entering the second processing volume. Preventing the liquid may include preventing at least 99%, at least 99.5%, or at least 99.9% of the liquid from entering the second processing volume.

To collect the liquid, the multi-level chimney tray may include a first chimney tray. The first chimney tray may be a plate that is shaped and sized to fit within an inner volume of the fluid-processing apparatus (e.g., within an inner volume of the column of the fluid-processing apparatus). The first chimney tray may be made of one or more materials that can withstand thermal and chemical conditions within the fluid-processing apparatus (e.g., contact with gases and liquids flowing through the processing volumes of the column). For example, the first chimney tray may be made of stainless steel, Hastelloy, carbon steel, other materials, or a combination thereof. The first chimney tray may be welded to an inner surface of the column to ensure a tight seal and secure positioning of the first chimney tray with the column.

The multi-level chimney tray may further include a second chimney tray positioned below the first chimney tray in the column. The second chimney tray may also be a plate that is shaped and sized to fit within the inner volume of the column and may also be made of one or more materials that can withstand the thermal and chemical conditions within the column. In some examples, the first chimney tray and the second chimney tray may be made of a same material as the column (e.g., 304 stainless steel or 316 stainless steel). The second chimney tray may be welded to another inner surface of the column below the inner surface to which the first chimney tray is welded.

Additionally, to allow the gas the flow upward, the first chimney tray can include a first set of gas chimneys. Each gas chimney of the first set of gas chimneys may include a gas conduit. Each gas conduit may be a hollow structure extending through the first chimney tray. Each gas conduit may further protrude from a top surface of the first chimney tray. The first set of gas chimneys may each further include a cover that is positioned above and spaced apart from a gas conduit. A diameter of each cover can be equal to or greater than a diameter of each gas conduit. Each of the first set of gas chimneys may further include one or more supports that are welded or otherwise connected to the cover on one end and to the gas conduit on the other end to position the cover above and spaced apart from the gas conduit.

The second chimney tray can further include a second set of gas chimneys. Each gas chimney of the second set of gas chimneys may include a gas conduit (i.e., a hollow structure extending through the second chimney tray). The gas conduits may further protrude from a top surface of the second chimney tray. In some examples, the second set of gas chimneys may include covers that are positioned above and spaced apart from the gas conduits. In other examples, the second set of gas chimneys may not include covers or a subset of the second set of gas chimneys may not include covers.

The fluid-processing apparatus may be part of an industrial plant. Examples of industrial plants that may include one or more fluid-processing apparatuses include chemical processing plants, petrochemical processing plants, gas processing plants, and other industrial plants in which one or more gases, one or more liquids, or a combination are produced or otherwise processed. One function of a fluid-processing apparatus in an industrial plant may be to facilitate contact between one or more gases and one or more liquids. Contact between a gas and a liquid in a fluid-processing apparatus may result in a phase transition. A phase transition may be a process by which a substance transitions from one phase to another (e.g., from a liquid phase to a gas phase or vice versa). For example, when a liquid (e.g., an amine solution) contacts a gas (e.g., a natural gas containing carbon dioxide), the liquid may absorb a component of the gas (e.g., the amine solution may absorb the carbon dioxide).

In fluid-processing apparatuses, it may be desirable to prevent a liquid from entering a particular processing volume. For example, if the liquid were to leak from the second processing volume to the first processing volume of the column, the liquid may contaminate a process carried out in the first processing volume. Contamination of the process may cause impurities in the gas or in a liquid in the first processing volume. Such impurities can pose a safety risk (e.g., a risk of fire or production of toxic chemicals), reduce production quality or efficiency in the associated industrial plant, or otherwise negatively affect the associated industrial plant. Additionally or alternatively, the liquid may be exposed to an environment of the industrial plant (e.g., a body of water) if the product leaks into the lower processing volume. Exposure to the environment may be hazardous to the environment and may be in violation of environment and safety regulations.

The positioning of a multi-level chimney tray in a column of a fluid-processing apparatus between processing volumes may minimize or avoid leaks between the processing volumes. For example, the liquid may be flowing downward in the column while the gas is flowing upward in the column. The multi-level chimney tray may allow the gas to flow from the first processing volume to the second processing volume while preventing the second liquid from flowing from the second processing volume to the first processing volume. More specifically, the gas may flow from the first processing volume, through the first and second sets of gas chimneys of the first and second chimney trays respectively, to the second processing volume.

The multi-level chimney tray may prevent the liquid from flowing to the first processing volume by collecting the liquid at the first chimney tray. While the liquid is flowing downward in the column and being collected at the first chimney tray, the covers of the gas chimneys can prevent the liquid from flowing past the first chimney tray via the gas conduits. Once collected at the first chimney tray, the liquid may flow to a liquid outlet via a channel of the first chimney tray. The liquid may then be removed from the column via the liquid outlet. The channel may be a trough extending along a perimeter of the first chimney tray. In some examples, the surface of the first chimney tray may be sloped to facilitate the flow of the liquid into the channel. Moreover, in some examples, the channel may be the part of the first chimney tray which is welded or otherwise connected to the column.

Thus, the liquid may be drained from the first chimney tray via the liquid outlet to maintain a minimal level of the liquid on the first chimney tray. By draining the liquid collected at the first chimney tray, a quantity of the liquid on the first chimney tray may be reduced. Accordingly, a risk that the quantity of the liquid on the first chimney tray amounts to a level where the liquid can leak (e.g., spillover) into the gas chimneys is minimized.

To further minimize a risk of the liquid leaking through the first set of gas chimneys, the first chimney tray may include liquid motion dampening baffles. The liquid motion dampening baffles may be partitions placed between at least some of the gas chimneys of the first set of gas chimneys. For example, each of the liquid motion dampening baffles may be a flat metal sheet, a perforated metal sheet, a foam panel, a plastic sheet, or the like. The liquid motion dampening baffles may reduce movement (e.g., sloshing) of the second liquid by disrupting the movement. By reducing the movement, the liquid motion dampening baffles reduce a likelihood of the liquid spilling over into the gas conduits of the first set of gas chimneys.

Although the liquid is collected at and drained from the column at the first chimney tray, occasional leaks may occur. For example, a failure of the first liquid outlet to drain the liquid, a failure of a cover to prevent the liquid from entering a gas conduit (e.g., due to damage to the cover), or excessive movement of the liquid (e.g. sloshing) may result in the liquid leaking to the second chimney tray via the first set of gas chimneys. In situations in which there is a leak of the fluid, the second chimney tray provides an additional layer of protection to prevent the liquid from reaching the first processing volume. For example, the first set of gas chimneys may be laterally offset relative to the second set of gas chimneys. Consequently, when there is a leak of the liquid via one of the first set of gas chimneys, the liquid that leaks contacts a surface of the second chimney tray rather than one of the second set of gas chimneys.

Additionally, the second chimney tray may include a second liquid outlet and a second channel. The second liquid outlet may be positioned within the second channel. The liquid may therefore flow from the surface of the second chimney tray to the second channel. The liquid may then flow to the second liquid outlet via the second channel to remove the liquid from the column. In some examples, the surface may slope to facilitate the flow of the liquid to the second channel. Similar to the first channel, the second channel may be a trough extending about a perimeter of the second chimney tray.

In some examples, the multi-level chimney tray further includes a leak detection system for detecting contact of the liquid with the second chimney tray. The leak detection system may include at least one leak detection sensor for detecting the contact of the second liquid with the second chimney tray. When the second liquid is detected, the leak detection system may transmit an alert to a user device or a control system. The control system may be a part of an industrial plant that regulates the behavior of other devices using feedback loops. The control system may include sensors that measure critical parameters, controllers that process these measurements using algorithms, and actuators that implement the control actions. By sending the alert to the user device or the control system, a potential issue at the first chimney tray causing the leak (e.g., a failure of the first liquid outlet or a cover of a gas chimney) can be identified in an efficient manner. Additionally, in some examples, the alert may cause the control system to stop a process (e.g., the input of a gas or liquid into a processing volume) to minimize damage caused by the leak.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

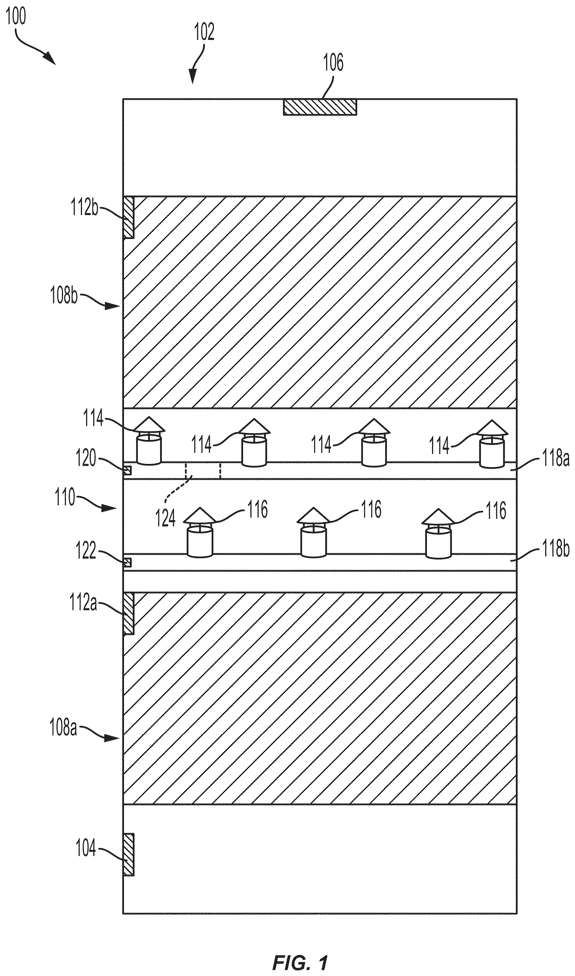

FIG. 1 is a schematic example of a fluid-processing apparatus 100 according to some aspects of the present disclosure. The fluid-processing apparatus 100 includes a column 102. The column 102 may be a substantially vertical structure through which one or more gases, one or more liquids, or a combination thereof can flow. The column 102 may be a distillation column (e.g., a column in which a liquid mixture may be separated based on a boiling point of at least one component of the liquid mixture), an absorption column (e.g., a column in which at least one component of a gas mixture may be transferred into a liquid phase), or a stripping column (e.g., a column in which at least one component of a liquid mixture is removed using a stripping gas). The column 102 may be part of an industrial plant (e.g., an onshore processing plant or an offshore processing plant). Examples of onshore processing plants and offshore processing plants include chemical processing plants, petrochemical processing plants, gas processing plants, and other processing plants in which the one or more gases, the one or more liquids, or the combination thereof are produced or otherwise processed.

The column 102 includes a gas inlet 104 that may introduce a gas into the column 102. The gas may be a hydrocarbon vapor (e.g., methane, ethane, etc.), steam, an acid gas (e.g., H₂S, CO₂, etc.), a stripping gas, or any other gas to be processed in the column 102. The column 102 further includes a gas outlet 106 for expelling the gas from the column 102 to be directed to another destination such as into another component of the processing plant (e.g., a condenser, a compressor, a storage tank, a flare system, another column, a vent system, or the like).

The fluid-processing apparatus 100 shown in FIG. 1 includes a first processing volume 108a. A processing volume may be a section of a column in a fluid-processing apparatus through which one or more gasses flow, one or more liquids flow, or a combination thereof. Additionally, in some examples, a processing volume can be the section of a column in which a gas contacts a liquid. In the example shown, the first processing volume 108a of the column 102 includes a first liquid inlet 112a for introducing a first liquid into the column 102. The first liquid may include one or more liquid components. For example, the liquid may be or include water, a hydrocarbon mixture, an amine solution, methanol, etc. The type of liquid may depend on the design or purpose of the column 102 (e.g., whether the column 102 is a distillation column, an absorption column, a stripping column, etc.), the design or purpose of the processing plant that includes the column 102, or a combination thereof.

The first processing volume 108a may further be the section of the column 102 where the first liquid contacts the gas. Contact of a liquid and a gas in a processing volume may involve an interaction between at least some liquid molecules of the liquid and at least some gas molecules of the gas. For example, the interaction may involve the liquid molecules cooling the gas molecules or vice versa. In another example, the interaction may involve the liquid molecules absorbing a component of the gas molecules or vice versa. In other examples, two or more liquids or two or more gases may contact one another in a processing volume. In such examples, the contact may involve an interaction between the liquids or the gasses (e.g., the cooling of one of the liquids or of one of the gasses or the absorption of a component by one of the liquids or gasses). Additionally or alternatively, in such examples, the contact may include the liquids or the gasses combining with one another.

In the example of FIG. 1, the first processing volume 108a is positioned above the gas inlet 104. Consequently, as the gas flows upward from its introduction point at the gas inlet 104 to the first processing volume 108a, the gas can contact the first liquid, flowing downward, in the first processing volume 108a. In other examples the gas inlet 104 may be positioned elsewhere with respect to the first processing volume 108a. For example, the gas inlet 104 may be within the first processing volume 108a. As such, the first liquid introduced into the first processing volume 108a may contact the gas introduced into the first processing volume 108a.

In other implementations the first processing volume 108a may not have any liquid introduced into that volume.

Returning to the example of FIG. 1, the fluid-processing apparatus 100 also includes a second processing volume 108b that is above the first processing volume 108a. The second processing volume 108b includes a second liquid inlet 112b that introduces a second liquid into the column 102. Similar to the first processing volume 108a, the second processing volume 108b is configured to contact the second liquid with the gas by receiving the second liquid flowing downward in the column 102 from the second liquid inlet 112b and the gas flowing upward from the first processing volume 108a. In one particular example, the contact of the first liquid with the gas in the first processing volume 108a may cool the gas. Then, the contact of the second liquid with the gas in the second processing volume 108b may remove a pollutant (e.g., carbon dioxide) from the gas.

In other examples, other processes may be performed in the first and second processing volumes 108a-b respectively. For example, both the contact of the first liquid with the gas in the first processing volume 108a and the contact of the second liquid with the gas in the second processing volume 108b may remove one or more pollutants from the gas. Alternatively, other absorption processes, distillation processes, heating processes, cooling processes, stripping processes, or the like may be performed in the first and second processing volumes 108a-b respectively in other examples. Moreover, the first processing volume 108a may not receive a liquid in some examples, but rather may be a section of the column 102 for which it is desirable to prevent the second liquid from entering (e.g., a section of the column that is exposed to an environment surrounding the industrial plant).

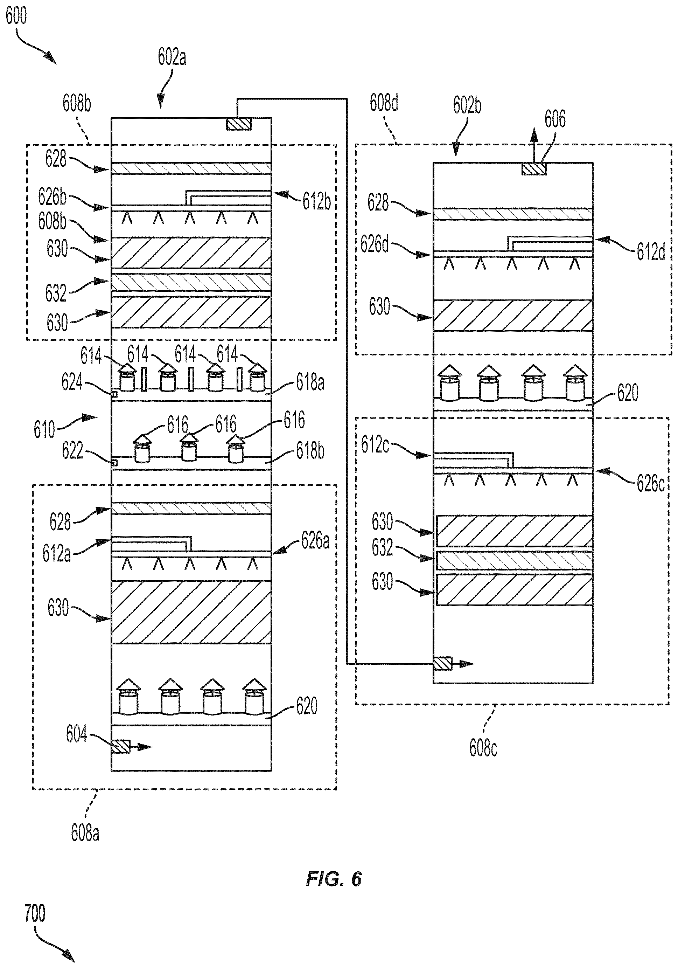

In some examples, the first processing volume 108a and/or the second processing volume 108b may include one or more additional structures to facilitate contact of the gas and the first and second liquids respectively. Examples of the additional structures include packing, liquid distributors, liquid redistributors, and mesh pads. Examples of the additional structures are shown and described below with respect to FIG. 6.

Additionally, column 102 includes the multi-level chimney tray 110 that is above the first processing volume 108a and below the second processing volume 108b. The multi-level chimney tray 110 may allow the gas to flow upwardly from the first processing volume 108a into the second processing volume 108b while preventing the second liquid from flowing from the second processing volume 108b to the first processing volume 108a. To allow the gas to flow from the first processing volume 108a to the second processing volume 108b, the multi-level chimney tray 110 includes a first chimney tray 118a with first gas chimneys 114 and a second chimney tray 118b that is below the first chimney tray 118a and includes second gas chimneys 116. The gas can flow from the first processing volume 108a to the second processing volume 108b through the second gas chimneys 116 and the first gas chimneys 114.

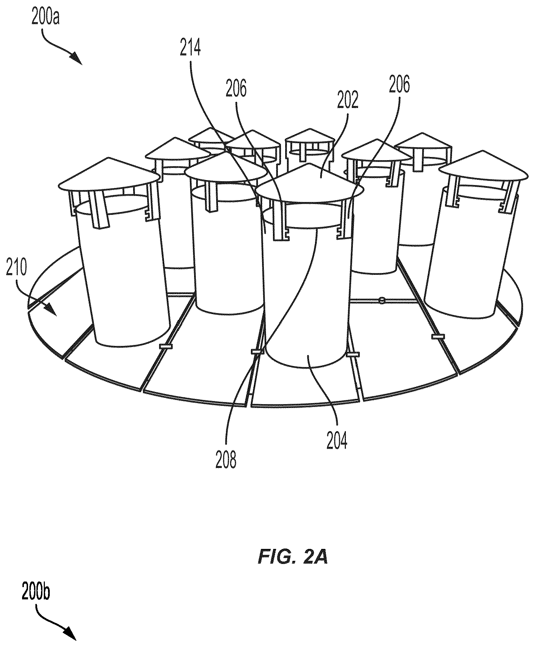

At least some gas chimneys of the second gas chimneys 116 and the first gas chimneys 114 may include a gas conduit and a cover. The gas conduits may be tubular components that extend through the respective chimney tray and that may further protrude upwardly from the respective chimney tray. The covers may be positioned above and spaced apart from upper edges of the gas conduits. Examples of gas chimneys of a chimney tray are shown in more detail in FIGS. 2A-B. For example, FIG. 2A shows a chimney tray 200a on which a gas chimney 214 is positioned. The gas chimney 214 includes a cover 202 and a gas conduit 204. The chimney tray 200a may correspond to either the first chimney tray 118a or the second chimney tray 118b. The gas conduit 204 is shown as a tubular component protruding from a surface 210 of the chimney tray 200a. Moreover, the cover 202 is a conical component positioned above and spaced apart from an upper edge 208 of the gas conduit 204. To position the cover 202 above and spaced apart from the upper edge 208, FIG. 2A shows supports 206 extending between the cover 202 and the gas conduit 204.

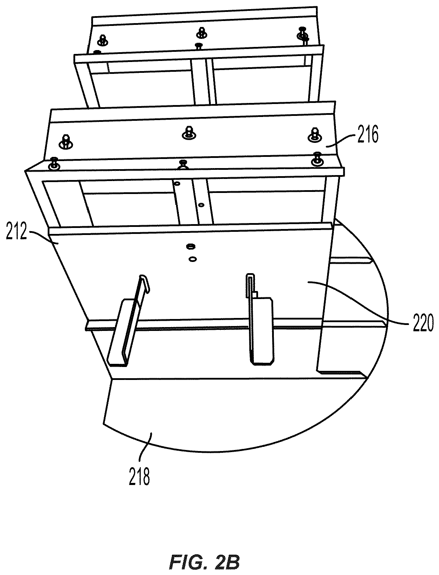

In other examples, the gas chimneys can have a different structure than what is shown in FIG. 2A. The different structure may still enable a gas to flow upward while preventing a liquid from flowing through. For example, FIG. 2B shows another chimney tray 200b with a gas chimney 212. The gas chimney 212 also includes a cover 216 and a gas conduit 220. The chimney tray 200b may correspond to either the first chimney tray 118a or the second chimney tray 118b. In contrast to FIG. 2A, the gas conduit 220 is shown as a rectangular component protruding from a surface 218 of the chimney tray 200b. However, the cover 216 is still positioned above and space apart from an upper edge of the gas conduit 220 to enable a gas to flow upward while preventing a liquid from flowing through.

There may be a different number of gas chimneys or the gas chimneys may have other shapes, dimensions, or positioning with respect to a chimney tray in other examples. The dimensions, number, positioning, and shape of the gas conduits may be determined based on a computational fluid dynamics (CFD) analysis in which behavior of the gas, the first liquid, the second liquid, or a combination thereof may be predicted based on a design of the column 102. Moreover, in other examples, the covers may be another shape (e.g., hemispherical, a flat plate, etc.), size, or be positioned further from or closer to the upper edges of the gas conduits. The shape, size, position, or a combination thereof of the covers may also be determined based on the CFD analysis.

Additionally, as shown in FIG. 1, the first gas chimneys 114 are laterally offset from the second gas chimneys 116 when the column 102 is oriented in a substantially vertical orientation. As a result, each gas chimney of the second gas chimneys 116 is vertically aligned with a gas impermeable section (e.g., gas impermeable section 124) of the first chimney tray 118a. The gas impermeable sections of the first chimney tray 118a may include any section of the first chimney tray 118a which does not have a gas conduit extending therethrough. By having the second gas chimneys 116 and first gas chimneys 114 laterally offset from one another, a flow path of the gas flowing upwardly from the first processing volume 108a to the second processing volume 108b is tortuous. This can help to evenly distribute the gas across the column 102 as gas moves from the first processing volume 108a to the second processing volume 108b, which, in turn may improve the contact of the second liquid.

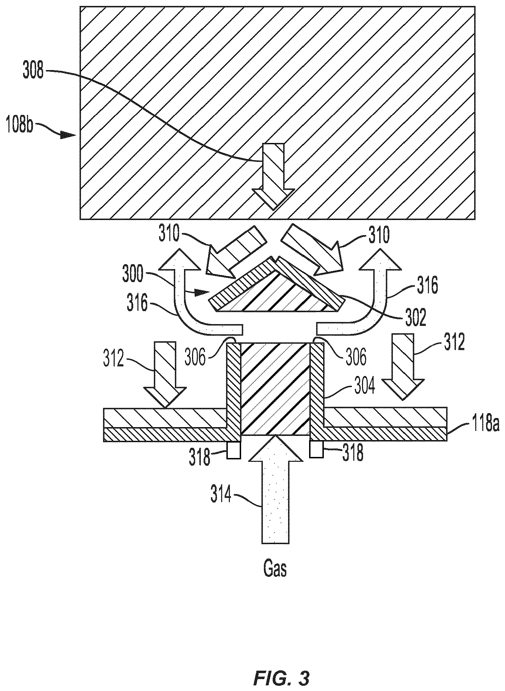

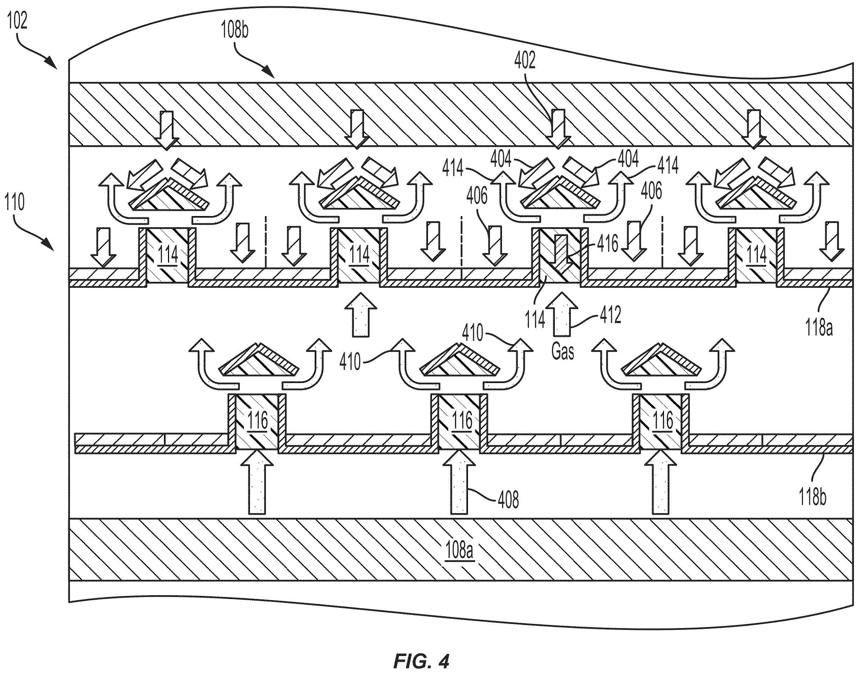

The tortuous flow path of the gas caused by the lateral offset of the first gas chimneys 114 with respect to the second gas chimneys 116 is shown and described below with respect to FIG. 4. The positioning of the covers above and spaced apart from the upper edges of the gas conduits may also facilitate the tortuous flow path. For example, FIG. 3 depicts a cross-sectional view of a gas chimney 300 of the multi-level chimney tray 110 according to some aspects of the present disclosure. The gas chimney 300 may correspond to any of the first gas chimneys 114 of the first chimney tray 118a shown in FIG. 1. In FIG. 3, a flow path of the second liquid is shown by the downwardly-oriented arrows. For example, a first downwardly-oriented arrow 308 shows that the second liquid is moving downward in the column 102 from the second processing volume 108b. Additionally, second downwardly-oriented arrows 310 shown the second liquid contacting a cover 302 of the gas chimney 300. The second downwardly-oriented arrows 310 as well as third downwardly-oriented arrows 312 further show that the sloped surface of the cover 302 deflects the second liquid toward the first chimney tray 118a. Once on the first chimney tray 118a, the second liquid may flow toward a liquid outlet. An example of a liquid outlet 120 associated with the first chimney tray 118a is shown in FIG. 1.

Conversely, a flow path of the gas is shown by the upwardly-oriented arrows in FIG. 3. For example, a first upwardly-oriented arrow 314 shows that the gas is flowing upward through the gas chimney 300 to the second processing volume 108b. Similar to the examples shown and described above with respect to FIGS. 1 and 2, the cover 302 of the gas chimney 300 is positioned above and spaced apart from an upper edge 306 of the gas chimney 300. Thus, as the gas flows upward through the gas chimney 300, the cover prevents the gas from flowing in a relatively straight flow path. Instead, as shown by second upwardly-oriented arrows 316 in FIG. 3, the flow path of the gas is tortuous such that the gas flows outward from the gas chimney 300 via the space between the cover 302 and the upper edge 306. In this way, the gas chimney 300 may distribute the gas to facilitate a relatively uniform distribution of the gas across the second processing volume 108b of the column 102.

Relatively uniform distribution of the gas across the second processing volume 108b may be desirable for several reasons. For example, relatively uniform distribution of the gas may facilitate efficient contact between the gas and the second liquid in the column 102. That is, by the gas being relatively uniformly distributed across the second processing volume 108b, the gas can interact uniformly with the second liquid which may also be relatively uniformly distributed across the second processing volume 108b. The resulting contact between the gas and liquid may enable efficient processes to be performed in the column 102 (e.g., efficient distillation of the second liquid or efficient absorption of one or more components of the gas).

FIG. 3 further shows an extended section 318 of the gas chimney 300. In some examples, one or more of the first gas chimneys 114 of the first chimney tray 118a may have the extended section 318. The extended section 318 may be an extension of the gas conduit that protrudes past a bottom surface of the first chimney tray 118a. As a result, the extended section can direct any liquid that may leak through the gas conduit downwards to prevent the liquid from attaching to the bottom surface of the first chimney tray 118a. In this way, the extended section 318 can ensure that any leakage of a liquid through the gas conduit 304 can drip directly below the first chimney tray 118a, to the second chimney tray 118b, thereby avoiding drips at unintended locations.

FIG. 4 shows an example gas and fluid flow patterns through the multi-level chimney tray 110. FIG. 4 depicts a cross-sectional view of the multi-level chimney tray 110 in the column 102. Similar to FIG. 3, a flow path of the second liquid is shown in FIG. 4 by the downwardly-oriented arrows. In FIG. 4., the second liquid is moving downward in the column 102 from the second processing volume 108b to the first chimney tray 118a (e.g., as indicated by first downwardly-oriented arrow 402). In doing so, the second liquid either contacts the covers of each of the first gas chimneys 114 and flows from the covers on to a surface of the first chimney tray 118a (e.g., as indicated by second downwardly-oriented arrows 404) or the second liquid falls directly on to the surface of the first chimney tray 118a. Once on the surface, the second liquid may flow along the surface of the first chimney tray 118a to a liquid outlet 120.

In some examples, some of the second liquid may leak from the first chimney tray 118a to the second chimney tray 118b via one of the first gas chimneys 114 (e.g., as indicated by a third downwardly-oriented arrow 416). This may occur as a result of a crack or other damage to one of the covers of the first gas chimneys 114. In another example, a blockage at the liquid outlet 120 or another issue preventing proper drainage of the second liquid from the first chimney tray 118a may result in some spillover of the second liquid into the gas conduits of the first gas chimneys 114. It may be desirable to prevent the second liquid from reaching the first processing volume 108a to maintain process efficiency within the column, to prevent cross-contamination or hazardous conditions within the column, to prevent environmental impact (e.g., release of hazardous chemicals in an environment surrounding the industrial plant that the column 102 is in), or a combination thereof. To prevent the second liquid from reaching the first processing volume 108a, any leakage of the second liquid can be collected at the second chimney tray 118b and drained via another liquid outlet 122 associated with the second chimney tray 118b.

Additionally, a flow path of the gas is shown by the upwardly-oriented arrows in FIG. 4. In FIG. 4, the gas is flowing upward from the first processing volume 108a to the second chimney tray 118b. At the second chimney tray 118b, the gas flows through gas conduits of the second gas chimneys 116 (e.g., as indicated by a first upwardly-oriented arrow 408). Then the gas flows through the spaces between the covers and the upper edges of the second gas chimneys 116 (e.g., as indicated by second upwardly-oriented arrows 410). In this way, the second gas chimneys 116 can facilitate a relatively uniform distribution of the gas across a space between the chimney trays 118a-b. The gas may then flow through each of the first gas chimneys 114 to the second processing volume 108b of the column 102. As a result, the gas can be distributed across the second processing volume 108b for contacting the second liquid.

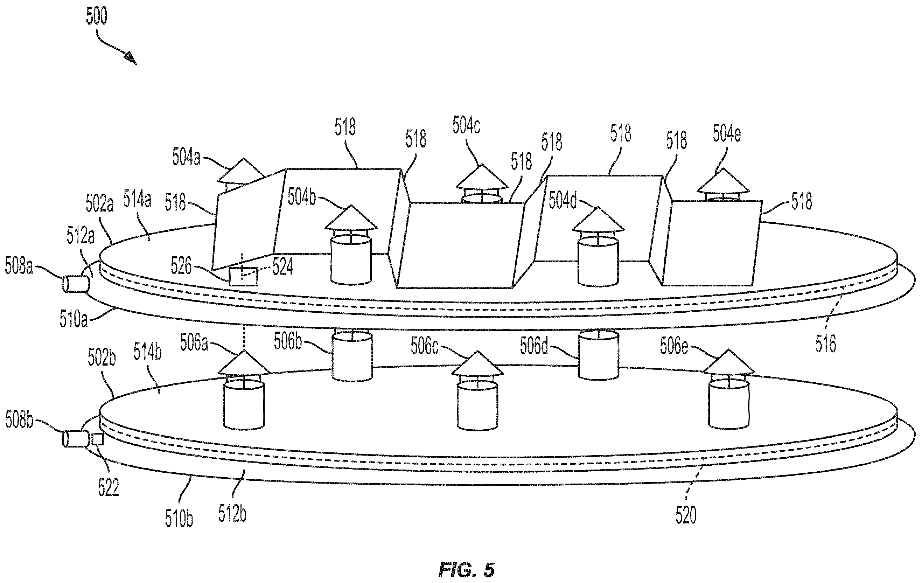

FIG. 5 is a perspective view of a multi-level chimney tray 500 according to some aspects of the present disclosure. The multi-level chimney tray 500 can be positioned in a column (e.g., column 102 of FIG. 1) of an industrial plant. The multi-level chimney tray 500 may positioned above a first processing volume of the column. A gas may flow upward in the column through the first processing volume. Concurrently, a liquid may flow downward from a second processing volume of the column below which the multi-level chimney tray 500 may be positioned. The gas may flow through the multi-level chimney tray 500 to second processing volume to contact the liquid. The contact of the gas and liquid may change one or more properties of the gas, one or more properties of the liquid, or a combination thereof.

The multi-level chimney tray 500 may allow the gas to flow upwardly from the first processing volume to the second processing volume while preventing the liquid from flowing from the second processing volume to the first processing volume below. To do so, the multi-level chimney tray 500 may include a first chimney tray 502a with a first set of gas chimneys 504a-e and a second chimney tray 502b that is below the first chimney tray 502a and includes a second set of gas chimneys 506a-e.

The liquid may first come into contact with the first chimney tray 502a. More specifically, the liquid may first come into contact with a top surface 514a of the first chimney tray 502a or may first come into contact with covers of each of the set of gas chimneys 504a-e and then flow to the top surface 514a of the first chimney tray 502a. The covers can therefore prevent the liquid from leaking to the second chimney tray 502b via the first set of gas chimneys 504a-e. To further prevent the liquid from leaking to the second chimney tray 502b, the first chimney tray 502a can include a first liquid outlet 508a and a first channel 510a. The liquid may flow from the top surface 514a to the first channel 510a. As shown, an inner surface 512a of the first channel 510a is lower than the top surface 514a of the first chimney tray 502a. In some examples, the top surface 514a at may slope to facilitate the flow of the liquid to the first channel 510a. The first channel 510a may be a trough extending about at least a portion of a perimeter 516 of the first chimney tray 502a. For example, the first channel 510a may extend between 20% and 100% of the perimeter 516. The first liquid outlet 508a may be positioned within the first channel 510a to enable the liquid to be drained from the first chimney tray 502a. The inner surface 512a of the first channel 510a may slope toward to the first liquid outlet 508a in some examples.

In some implementations, the first chimney tray 502a may include more than one liquid outlet spaced apart about the perimeter 516. For example, there may be four liquid outlets spaced apart evenly about the perimeter 516 of the first chimney tray 502a. Moreover, in some examples, there may be separate channels extending about different portions of the perimeter 516 of the first chimney tray 502a. In such examples, there may be a liquid outlet associated with each channel to enable the liquid to be drained from each of the channels. Additionally, in some examples, the first chimney tray may not include a channel. In such examples, the liquid can be drained from one or more liquid outlets on the top surface 514a of the first chimney tray 502a.

The first chimney tray 502a further includes liquid motion dampening baffles 518. Each of the liquid motion dampening baffles 518 may be a partition placed between at least two of the first set of gas chimneys 504a-e. For example, each of the liquid motion dampening baffles 518 may be a flat metal sheet, a perforated metal sheet, a foam panel, a plastic sheet, or the like. The liquid motion dampening baffles 518 may dampen movement of the liquid (i.e., reduce movement, such as sloshing, of the liquid) by disrupting the movement. This causes the liquid to change direction and lose energy. By dampening movement of the liquid, the liquid motion dampening baffles can minimize spillover of the liquid into one of gas chimneys 506a-e. Thus, the positioning of the liquid motion dampening baffles 518 on the first chimney tray 502a may minimize leakage of the fluid from the first chimney tray 502a to the second chimney tray 502b.

The liquid motion dampening baffles 518 may be particularly useful in examples in which the multi-level chimney tray 500 is used in an industrial plant that is positioned on a floating platform (e.g., an offshore processing plant for oil and gas production). The floating platform may be a tension leg platform, a spar platform, a semi-submersible platform, or the like that is positioned in a body of water such as an ocean, sea, lake, or other body of water, whether natural or manmade. Environmental conditions, such as waves, wind, etc., may cause a column with the multi-level chimney tray to rock or otherwise move, which may cause the liquid on the multi-level chimney tray to move (e.g., slosh back and forth).

Although the fluid can be collected at and drained from the column 102 at the first chimney tray 102a, some of the liquid may leak through the first chimney tray. For example, a failure at the liquid outlet or excessive movement of the liquid may cause spillover of the liquid to the second chimney tray 502b via the first set of gas chimneys 504a-e. In situations in which there is a leak of the liquid through the first chimney tray 502a, the second chimney tray 502b provides an additional layer of protection to prevent the liquid from reaching the second processing volume.

For example, fluid leaking through a gas chimney of the first set of gas chimneys 504a-e can be collected at a top surface 514b of the second chimney tray 502b. The liquid may then flow from the top surface 514b to a second channel 510b. In some examples, the top surface 514b may slope to facilitate the flow of the liquid to the second channel 510b. A second liquid outlet 508b positioned within the second channel 510b can then receive the liquid and drain the liquid away from the second chimney tray 502b. In this way, the liquid that leaks to the second chimney tray 502b is prevented from reaching the first processing volume.

Similar to the first channel 510a, the second channel 510b may extend about a portion of a perimeter 520 of the second chimney tray 502b. For example, the second channel 510b may extend between 20% and 100% of the perimeter 520. Additionally, an inner surface 512b of the second channel 510b is lower than the top surface 514b of the second chimney tray 502b in the example of FIG. 5. The inner surface 512b of the second channel 510b may slope toward to the second liquid outlet 508b in some examples.

In other implementations, the second chimney tray 502b may include more than one liquid outlet spaced apart about the perimeter 520. Moreover, in other examples, there may be separate channels extending about different portions of the perimeter 520 of the second chimney tray 502b. In such examples, there may be a liquid outlet associated with each channel to enable the liquid to be drained from each of the channels. Additionally, in some examples, the second chimney tray 502b may not include a channel. In such examples, the liquid can be drained from one or more liquid outlets on the surface of the second chimney tray 502b.

The multi-level chimney tray 500 further includes a leak detection system for detecting contact of the liquid with the second chimney tray 502b. The leak detection system may include a leak detection sensor 522 for detecting the contact of the liquid with the second chimney tray 502b. The leak detection sensor 522 may be any type of sensor that can be used to detect the presence of a fluid. For example, the leak detection sensor 522 may be an optical sensor, a pressure sensor, a capacitive sensor, a moisture sensor, a humidity sensor, a temperature sensor, or the like. Additionally, the leak detection system may alert a user of the contact of the liquid with the second chimney tray 502b. For example, the leak detection system may include a processor and a memory (not shown). In a non-limiting example, the memory can include instructions that are executable by the processor for causing the processor to perform operations that transmit an alert to a user device indicating that the liquid was detected, by the leak detection sensor 522, at the second chimney tray 502b. Although one example position of the leak detection sensor 522 is shown, the leak detection sensor 522 may reside in various locations relative to the multi-level chimney tray 500.

Additionally, FIG. 5 shows the first set of gas chimneys 504a-e as laterally offset relative to the second set of gas chimneys 506a-e. For example, a vertical axis 524 through a center of a gas chimney 506a of the second set of gas chimneys 506a-e is shown in FIG. 5. Because each gas chimney of the first set of gas chimneys 504a-e is laterally offset relative to each gas chimney of the second set of gas chimneys 506a-e, the vertical axis 524 intersects a gas impermeable section 526 of the first chimney tray 502a. In other words, each gas chimney of the first set of gas chimneys 504a-e is vertically aligned with a gas impermeable section (e.g., gas impermeable section 526) of the first chimney tray 502a. The gas impermeable sections of the first chimney tray 502a may include any portion of the first chimney tray 502a that is solid (i.e., any portion of the top surface 514a of the first chimney tray 502a through which a gas chimney does not extend). This offset positioning of the first set of gas chimneys relative to the second set of gas chimneys causes a flow path of the gas through the multi-level chimney tray to be tortuous.

FIG. 6 is a schematic example of a split fluid-processing apparatus 600 with a multi-level chimney tray 610 according to some aspects of the present disclosure. The split fluid-processing apparatus 600 may be part of an industrial plant, such as a chemical process plant, a gas processing plant, or the like. A split fluid-processing apparatus divides a process into multiple paths to enable sub-processes of the process to be performed in parallel to and/or independent of one another. A split fluid-processing apparatus may include dividing walls, packing, plates, baffles, liquid and gas distributors, gas and liquid inlets and outlets, or the like to facilitate isolation of the sub-processes. A particular example of an absorption process is shown and described below with respect to the split fluid-processing apparatus 600. An absorption process may involve removing a component of a gas by contacting the gas with a liquid absorbent. FIG. 6 is shown and described by way of particular example only, and provides just one example of how a multi-level chimney can be used in a fluid-processing apparatus.

In the particular example, a flue gas is introduced into a first processing volume 608a of a first section 602a of the split fluid-processing apparatus 600 via a gas inlet 604. The flue gas may be a mixture of gases produced as a byproduct of combustion. The flue gas may contain carbon dioxide, nitrogen, and water vapor as well as pollutants such as sulfur oxides and nitrogen oxides. Due to the presence of pollutants, the flue gas is treated via the absorption process to remove the pollutants before the flue gas is released into an environment external to the processing plant.

Additionally, in the first processing volume 608a, a first liquid is introduced via a first liquid inlet 612a. The first processing volume 608a can facilitate contact of the first liquid with the flue gas. In the particular example, the first liquid is cooling water with a temperature that is lower than a temperature of the flue gas. Consequently, the contact of the first liquid with the flue gas in the first processing volume 608a can cool the flue gas.

To facilitate the contact of the first liquid with the gas, the first processing volume 608a includes a first liquid distributor 626a. The first liquid distributor 626a may receive the first liquid from the first liquid inlet 612a and distribute the first liquid uniformly across an inner volume of the first section 602a corresponding to the first processing volume 608a.

In the example of FIG. 6, a chimney tray 620 is positioned in the first processing volume 608a above the gas inlet 604. The chimney tray 620 can facilitate uniform distribution of the flue gas across the inner volume of the first section 602a corresponding to the first processing volume 608a. For example, gas chimneys of the chimney tray 620 include gas conduits and covers. As the flue gas flows upward from the gas inlet 604, the flue gas flows through spaces between the gas conduits and the covers. This causes the flue gas to flow in a tortuous flow path that distributes the flue gas across the inner volume of the first section 602a corresponding to the first processing volume 608a. In other examples a schoepentoeter (not shown) or other gas separation device can be used to evenly distribute the flue gas across the inner volume of the first section 602a. The schoepentoeter may be a vane-type inlet device that distributes vapor in a vessel or column. Vanes of the schoepentoeter may split gas flow into a series of streams. The vanes may further reduce kinetic energy of the streams, which may allow the gas to enter the vessel smoothly and distribute uniformly.

Additionally, the first processing volume 608a includes packing 630 (e.g., M202Y packing or the like), which is situated below the first liquid distributor 626a and above the chimney tray 620 in the first section 602a. The packing 630 may include corrugated sheets arranged in a uniform pattern between the first liquid distributor 626a and the chimney tray 620. Due to the uniform pattern arrangement of the corrugate sheets can direct a flow path of the first fluid and a flow path of the flue gas. For example, the corrugated sheets may be arranged to direct the flue gas in a zig-zagging path as the flue gas flows upward through the packing 630. At the same time, the first liquid may flow downward along surfaces of the corrugated sheets in the zig-zagging path. Consequently, the flow path of the flue gas through the packing 630 intersects with the flow path of the first liquid along the packing 630, thereby facilitating contact of the flue gas with the first liquid.

Other implementations of the present disclosure may utilize packing with other types of sheets (e.g., non-corrugated sheets). Moreover, the sheets (e.g., the corrugated sheets or the non-corrugated sheets) may be made of any suitable material that can withstand contact with the gas and the first liquid (e.g., metal, plastic or ceramic) and may be arranged in any uniform pattern. Alternatively, some implementations may exclude the packing 630 or may have the packing arranged in a non-uniform pattern.

Above the packing, the first processing volume 608a further includes a mesh pad 628 to remove liquid droplets from the flue gas, which may form as a result of the cooling of the flue gas. Although the example shown in FIG. 6 includes the mesh pad 628, other examples may exclude the mesh pad. The mesh pad 628 may be made of a stainless steel knitted wire mesh or another knitted wire mesh made of another metal or a combination of metals.

After contacting the first fluid and flowing through the mesh pad 628, the flue gas flows through the multi-level chimney tray 610. The multi-level chimney tray 610 includes a first chimney tray 618a and a second chimney tray 618b. The gas can flow through the multi-level chimney tray 610 via second gas chimneys 616 of the second chimney tray 618b and first gas chimneys 614 of the first chimney tray 618a. The flue gas may have a temperature around 35 degrees Celsius when it reaches the multi-level chimney tray 610.

Once the flue gas flows through the multi-level chimney tray 610, the flue gas enters a second processing volume of the first section 602a. In the second processing volume 608b, a second liquid is introduced via a second liquid inlet 612b and distributed via a second liquid distributor 626b. Similar to the first processing volume 608a, the second processing volume 608b includes packing 630 to facilitate efficient contact of the second liquid with the flue gas. The second processing volume 608b further includes a redistributor 632 that can collect and redistribute the second liquid as it flows through the packing 630. In this way, a uniform distribution and flow rate of the second liquid as it flows through the packing 630 can be maintained.

In the particular example, the second liquid is a semi-rich amine solution. Consequently, contact of the second liquid with the flue gas causes the second liquid to absorb acid gases (like carbon dioxide and hydrogen sulfide) from the flue gas. After absorbing the acid gases from the flue gas, the semi-rich amine solution becomes a rich amine solution. The multi-level chimney tray 610 prevents the rich amine solution from leaking to the first processing volume 608a. From example, a majority of the rich amine solution can be collected by the first chimney tray 618a and drained from the first section 602a via a liquid outlet 624 of the first chimney tray 618a. Additionally, any potential leakage of the rich amine solution from the first chimney tray 618a to the second chimney tray 618b is collected at the second chimney tray 618b and drained via another liquid outlet 622 of the second chimney tray 618b.

Flue gas is then directed from the first section 602a to a second section 602b of the split fluid-processing apparatus. In the second section 602b, a third liquid is introduced into a third processing volume 608c via a third liquid inlet 612c and distributed via a third liquid distributor 626c. In some examples, there may be a chimney tray, schepentoeter, or other gas distributing device (not shown) for distributing the flue gas in the third processing volume 608c. The third processing volume 608c further includes more packing 630 and another redistributor 632 for facilitating efficient contact between the third liquid and the flue gas. In the particular example, the third liquid is a lean amine solution. Contact of the lean amine solution with the flue gas can remove additional acid gasses to further refine the flue gas.

The flue gas can then flow through another chimney tray 620. In other examples, the chimney tray 620 may be replaced with a multi-level chimney tray. Above the chimney tray 620 of the second section 602b, the flue gas can contact a fourth liquid in a fourth processing volume 608d. The fourth liquid may be water introduced into the fourth processing volume 608d via a fourth liquid inlet 612d and distributed via a fourth liquid distributor 626d. The contact of the water with the flue gas can remove any additional unwanted component of the flue gas such as entrained liquid droplets or impurities. Another mesh pad 628 can further help to remove liquid droplets from the flue gas. The flue gas, which has been purified by the contact with the first liquid, the second liquid, the third liquid, and the fourth liquid, can then exit the split fluid-processing apparatus 600 at gas outlet 606.

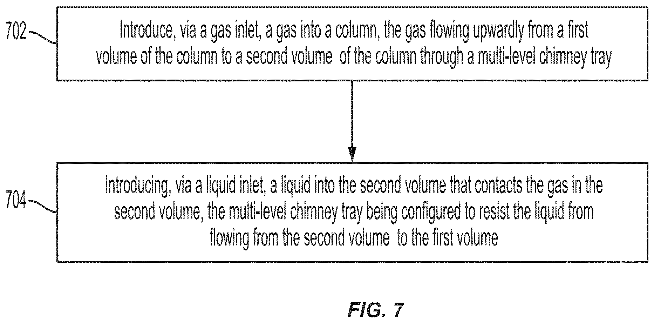

FIG. 7 is a flowchart of a method for distributing gas and preventing leakages in a fluid-processing using a multi-level chimney tray according to some aspects of the present disclosure. In other examples, the method 700 can include more steps, fewer steps, different steps, or a different order of the steps depicted in FIG. 7. The steps of FIG. 7 are described below with reference to components discussed above in FIGS. 1-6.

At block 702, the method 700 can involve introducing, via a gas inlet 104, a gas into a column 102. As a result, the gas can flow upwardly from a first volume (e.g., first processing volume 108a) of the column 102 to a second volume (e.g., second processing volume 108b) of the column 102 through a multi-level chimney tray 110. A volume can be a section of a column through which one or more liquids flow, one or more gases flow, or a combination thereof or a volume can be a section of a column for which it is desirable to prevent a liquid from flowing. The multi-level chimney tray 110 may include a first chimney tray 118a including first gas chimneys 114 and a second chimney tray 118b below the first chimney tray 118a and including second gas chimneys 116. The gas can flow through the multi-level chimney tray 110 via the first gas chimneys 114 and the second gas chimneys 116.

At block 704, the method 700 can involve introducing, via a liquid inlet, a liquid into the second volume (e.g., second processing volume 108b) that contacts the gas in the second processing volume 108b. The multi-level chimney tray 110 can prevent the liquid from flowing from the second processing volume 108b to the first processing volume 108a. To do so, the liquid can be collected at a surface of the first chimney tray 118a. The liquid can then be directed, via a channel extending about at least a portion of a perimeter of the first chimney tray 118a, to a liquid outlet 120. Additionally, to further prevent the liquid from flowing to the first processing volume 108a, movement of the liquid on the surface of the first chimney tray 118a can be dampened using one or more liquid motion dampening baffles positioned between at least two of the first gas chimneys.

If some of the liquid leaks through the first chimney tray 118a, the liquid can be collected at the second chimney tray 118b to prevent the liquid from reaching the first processing volume 108a. The liquid can then be directed, via a channel positioned about at least a portion of a perimeter of the second chimney tray 118b, to a liquid outlet 112. Moreover, a leak detection system of the multi-level chimney tray 110 may detect the liquid on the second chimney tray. In response to detecting the liquid on the second chimney tray 118b, the leak detection system can transmit an alert to a user device or control system.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A fluid-processing apparatus comprising:
a column comprising a gas inlet through which a gas is introduced into the column and a gas outlet;
a multi-level chimney tray positioned between a first processing volume of the column and a second processing volume of the column, the multi-level chimney tray comprising a first chimney tray comprising a first plurality of gas chimneys and a second chimney tray below the first chimney tray and comprising a second plurality of gas chimneys;
the first processing volume of the column comprising a first liquid inlet through which a first liquid is introduced into the column, wherein the first liquid contacts the gas in the first processing volume;
the second processing volume of the column located above the first processing volume, the second processing volume comprising a second liquid inlet through which a second liquid is introduced into the column, wherein the second liquid contacts the gas in the second processing volume; and
the multi-level chimney tray allowing the gas to flow upwardly from the first processing volume into the second processing volume and preventing the second liquid from flowing from the second processing volume to the first processing volume.

2. The fluid-processing apparatus of claim 1, wherein, when the column is oriented in a vertical orientation, the first plurality of gas chimneys are laterally offset relative to the second plurality of gas chimneys.

3. The fluid-processing apparatus of claim 2, wherein a flow path of the gas flowing upwardly from the first processing volume into the second processing volume is tortuous between the first plurality of gas chimneys and the second plurality of gas chimneys.

4. The fluid-processing apparatus of claim 1, wherein each gas chimney of the second plurality of gas chimneys is vertically aligned with a gas impermeable section of the first chimney tray.

5. The fluid-processing apparatus of claim 2, wherein the multi-level chimney tray further comprises one or more liquid motion dampening baffles, wherein each of the one or more liquid motion dampening baffles is positioned between at least two of the first plurality of gas chimneys.

6. The fluid-processing apparatus of claim 1, wherein the leak detection system comprises at least one leak detection sensor configured to detect the contact of the second liquid with the second chimney tray and, optionally, a processor configured to transmit an alert to a user device indicating the contact of the second liquid with the second chimney tray.

7. The fluid-processing apparatus of claim 1, wherein the multi-level chimney tray further comprises a channel extending about at least a portion of a perimeter of the first chimney tray, wherein an inner surface of the channel is lower than a top surface of the first chimney tray; optionally, wherein the multi-level chimney tray further comprises a second channel extending about at least a portion of a perimeter of the second chimney tray, wherein an inner surface of the second channel is lower than a top surface of the second chimney tray.

8. The fluid-processing apparatus of claim 1, wherein each gas chimney of the first plurality of gas chimneys comprises a cover and a gas conduit, wherein the cover is positioned above and spaced apart from an upper edge of the gas conduit.

9. The fluid-processing apparatus of claim 1, wherein each gas chimney of the second plurality of gas chimneys comprises a gas conduit; optionally, wherein at least some gas chimneys of the second plurality of gas chimneys further comprise a cover positioned above and spaced apart from an upper edge of the gas conduit.

10. A method comprising:
introducing, via a gas inlet, a gas into a column, the gas flowing upwardly from a first volume of the column to a second volume of the column through a multi-level chimney tray, the multi-level chimney tray comprising a first chimney tray comprising a first plurality of gas chimneys and a second chimney tray below the first chimney tray and comprising a second plurality of gas chimneys; and
introducing, via a liquid inlet, a liquid into the second volume that contacts the gas in the second volume, the multi-level chimney tray being configured to prevent the liquid from flowing from the second volume to the first volume.

11. The method of claim 10, further comprising collecting, at a surface of the first chimney tray, the liquid; and optionally further comprising directing, via a channel extending about at least a portion of a perimeter of the first chimney tray, the liquid to a liquid outlet.

12. The method of claim 10, further comprising motion dampening movement of the liquid on the surface of the first chimney tray using one or more liquid motion dampening baffles positioned between at least two of the first plurality of gas chimneys.

13. The method of claim 10, further comprising detecting, by a leak detection system of the multi-level chimney tray, the liquid on the second chimney tray; and optionally further comprising, in response to detecting the liquid on the second chimney tray, transmitting, by the leak detection system of the multi-level chimney tray, an alert to a user device or to a control system.

14. The method of claim 13, further comprising directing, via a channel positioned about at least a portion of a perimeter of the second chimney tray, the liquid on the second chimney tray to a liquid outlet.

15. A multi-level chimney tray comprising:
a first chimney tray comprising a first plurality of gas chimneys, wherein each gas chimney of the first plurality of gas chimneys comprises a cover of and a gas conduit, wherein the cover is positioned above and spaced apart from an upper edge of the gas conduit;
a second chimney tray positioned below the first chimney tray and comprising a second plurality of gas chimneys, wherein each gas chimney of the second plurality of gas chimneys comprises a gas conduit, and wherein the first plurality of gas chimneys are laterally offset relative to the second plurality of gas chimneys;
a first channel extending about at least a portion of a perimeter of the first chimney tray and configured to receive a liquid; and
a second channel extending about at least a portion of a perimeter of the second chimney tray and configured to receive the liquid.
